# EUROPÄISCHE PATENTSCHRIFT

(11) **EP 1 375 997 B1**
(45) Veröffentlichungstag und Bekanntmachung des Hinweises auf die Patenterteilung: **12.01.2005**
(21) Anmeldenummer: 02014325.1
(22) Anmeldetag: 27.06.2002
(51) Int. Cl.: F16L 53/00, F01M 13/00, E03B 7/12

(54) **Heizvorrichtung für eine Fluidleitung und Verfahren zur Herstellung**
Heating device for a pipe and method of production
Dispositiv de chauffage pour un conduit et procédé de construction

(43) Veröffentlichungstag der Anmeldung: 02.01.2004
(73) Patentinhaber: David & Baader DBK Spezialfabrik elektrischer Apparate und Heizwiderstände GmbH, 76870 Kandel/Pfalz (DE)
(72) Erfinder: Beetz, Klaus Dr., 76149 Karlsruhe (DE); Gschwind, Thomas, 67098 Bad Dürkheim (DE)
(74) Vertreter: Grünecker, Kinkeldey, Stockmair & Schwanhäusser Anwaltssozietät

(56) Entgegenhaltungen:
- US-A- 4 312 121
- US-A- 4 922 882
- PATENT ABSTRACTS OF JAPAN vol. 1998, no. 14, 31. Dezember 1998 (1998-12-31) & JP 10 231543 A (KAWAMOTO SEISAKUSHO:KK), 2. September 1998 (1998-09-02)
- PATENT ABSTRACTS OF JAPAN vol. 1998, no. 10, 31. August 1998 (1998-08-31) & JP 10 121937 A (AISAN IND CO LTD), 12. Mai 1998 (1998-05-12)
- PATENT ABSTRACTS OF JAPAN vol. 2000, no. 25, 12. April 2001 (2001-04-12) & JP 2001 220776 A (MICRON DENKI KK), 17. August 2001 (2001-08-17)

## Beschreibung

Die Erfindung betrifft eine Heizvorrichtung für eine Fluidleitung, insbesondere zur Kurbelgehäuseentlüftung einer Verbrennungskraftmaschine, mit einem Heizelement und mit einer Halteeinrichtung, durch die das Heizelement an der Fluidleitung befestigbar ist. Die Erfindung betrifft auch eine Fluidleitung zur Aufnahme einer solchen Heizvorrichtung sowie ein Heizmodul mit einer Fluidleitung und daran angebrachter Heizvorrichtung. Die Erfindung betrifft schließlich auch ein Verfahren zur Herstellung der eingangs genannten Heizvorrichtung.

Bei modernen Verbrennungskraftmaschinen sind für das Kurbelgehäuse, in dem der Kurbeltrieb mit der Kurbelwelle, den Pleuelstangen und den Kolben sowie die Zylinder aufgenommen ist, Entlüftungen vorgesehen. Das Kurbelgehäuse ist zylinderseitig durch einen oder mehrere Zylinderköpfe abgedichtet, unten schließt sich an das Kurbelgehäuse üblicherweise eine Ölwanne an.

Im Betrieb der Verbrennungskraftmaschine füllt sich das Kurbelgehäuse bis zum Zylinderkopf mit Öldämpfen und Gasen, die an den Kolbenringen vorbei aus dem Verbrennungsraum der Zylinder entweichen. Diese Öldämpfe und Gase werden auch als Blowby-Gase bezeichnet. Durch die Pumpbewegung der Kolben werden die Blowby-Gase unter Druck gesetzt. Da die Öldämpfe und Gase im Kurbelgehäuse große Mengen an umweltschädlichen Kohlenwasserstoffen enthalten, sind Maßnahmen zu ergreifen, die ein Entweichen der Öldämpfe und Gase aus dem Kurbelgehäuse verhindern.

Zu diesem Zweck ist es bekannt, Kurbelgehäuseentlüftungen vorzusehen, die den Innenraum des Kurbelgehäuses mit den Luftansaugleitungen der Verbrennungskraftmaschine verbinden, so dass die Blowby-Gase aus dem Kurbelgehäuse zusammen mit der Frischluft angesaugt und verbrannt werden.

Wenn die Frischluft und die Blowby-Gase aus dem Kurbelgehäuse jedoch stark unterschiedliche Temperaturen aufweisen, kann es im Mischungsbereich zu Kondensationen und Ausfällungen kommen, die die Kurbelgehäuseentlüftung verstopfen.

Insbesondere bei Automotoren treten bei Kaltstarts im Winter hohe Temperaturdifferenzen zwischen der kalten Ansaugluft einerseits und dem sich mit dem Motorblock schnell aufwärmenden Blowby-Gasen aus dem Kurbelgehäuse andererseits auf, was in einigen Fällen sogar zur Vereisung oder Verstopfung der Mündung der Fluidleitung der Kurbelgehäuseentlüftung führen kann. Bei einer Verstopfung der Kurbelgehäuseentlüftung baut sich im Kurbelgehäuse ein hoher Druck auf, der das Schmieröl aus den Dichtungen an der Kurbelwelle, Ölwanne oder aus der Öffnung für den Ölmessstab drücken kann. Außerdem müssen die Kolben gegen den hohen Druck im Kurbelgehäuse vermehrt Arbeit leisten, was zu einer Verringerung des Wirkungsgrades der Verbrennungskraftmaschine führt.

Die Kondensation der Gase und das Ausfällen von Mischungsbestandteilen bei niedrigen Außentemperaturen wird im Stand der Technik durch Heizvorrichtungen in den Leitungen zur Kurbelgehäuseentlüftung vermieden. Derartige Heizvorrichtungen sind beispielsweise aus der DE-A-2432782, der US-A-4922882, der US-A-5970962, der US-A-6062206, der JP-AA-10231543, der JP-AA-10121937 und der EP-A-1164264 bekannt.

Bei der Kurbelgehäuseentlüftung der DE-A-2432782 ist die Mündungsstelle der Entlüftungsleitung am Ansaugsystem elektrisch beheizbar. Hierzu dient eine Heizvorrichtung, die aus einem metallischen Rohrstück mit auf dessen Mantelfläche koaxial angeordnetem elektrischen Heizleiter besteht. Zum Beheizen wird eine auf einem Spulenkörper befindliche Heizdrahtwicklung verwendet. Nachteilig bei der Heizvorrichtung der DE-A-2432782 ist vor allem der große Platzbedarf, der eine Verwendung bei modernen Motoren nahezu unmöglich macht. Außerdem ist die Heizvorrichtung der DE-A-2432782 schwer zu montieren und im Schadensfall schwer auszutauschen.

Die US-A-4922882 befasst sich mit einem Kurbeigehäuse-Entlüftungssystem, das über das Kühlsystem des Verbrennungskraftmotors beheizt wird. Hierzu ist im Bereich der Zuleitung der Kurbelgehäusegase in die Ansaugleitung des Motors eine die Ansaugleitung umgebende Ringleitung vorgesehen. Die Ringleitung wird über das Kühlsystem bei sehr kalten Außentemperaturen beheizt.

Bei den weiter entwickelten Heizvorrichtungen der US-A-5970962 und der US-A-6062206 wird ein PTC (Positive Temperature Coefficient) Heizelement anstelle eines Heizdrahtes verwendet. Das Heizelement ist wärmeleitend mit einer die Mündung der Kurbelgehäuseentlüftung umgebenden Wärmesenke verbunden. Die Wärmesenke und das Heizelement sind in einem Stopfen integriert, der gleichzeitig die Mündung der Kurbelgehäuseentlüftung bildet. Zwar ist der Platzbedarf bei den Vorrichtungen der US-A-5970962 und der US-A-6062206 geringer als bei der Heizvorrichtung der DE-A-2432782, doch ist deren aufwendige Herstellung sowie deren schlechte Zugänglichkeit an der Verbrennungskraftmaschine zu Wartungszwecken nachteilig.

In der JP-AA-10231543 ist eine Heizvorrichtung gezeigt, bei der ein zylindrisches, metallenes Wärmeabstrahlteil in eine Durchgangsöffnung einer Rohrleitung eingesetzt wird. Am anderen Ende des Wärmeabstrahlteils ist ein Montagesitz wasserdicht an einem rohrseitigen Montagesitz befestigt. Das zylindrische Wärmeabstrahlteil ragt in eine Strömung hinein und überträgt die Wärme von der Heizvorrichtung direkt auf das Fluid in der Rohrleitung.

Die JP-AA-10121937 betrifft eine Heizung für ein Blow-by-Gas mittels eines PCV-Ventils. Das Gehäuse des PCV-Ventils wird durch einen Heizschlauch über einen Blattfederclip beheitzt.

In der EP-A-1164264 werden die PTC-Elemente mittels eines elektrisch nicht leitfähigen Silikonklebers an der Fluidleitung für die Kurbelgehäuseentlüftung aufgeklebt und nach der Montage kunststoffumspritzt. Dadurch wird eine kompakte Bauform unabhängig von der Ausgestaltung der Fluidleitung erreicht. Allerdings ist die Heizvorrichtung der EP-A-1164264 hinsichtlich ihrer Wartungsfreundlichkeit verbesserungsfähig.

In Anbetracht der Nachteile der aus dem Stand der Technik bekannten Heizvorrichtungen liegt der Erfindung daher die Aufgabe zugrunde, eine Heizvorrichtung für Fluidleitungen, insbesondere für Kurbelgehäuseentlüftungen von Verbrennungskraftmaschinen, so zu verbessern, dass sie bei einer kompakten Bauweise wartungsfreundlicher und leichter zu montieren sind.

Diese Aufgabe wird für eine Heizvorrichtung der eingangs genannten Art dadurch gelöst, dass die Halteeinrichtung einen Vorsprung aufweist, in dem das Heizelement aufnehmbar ist und der in einen im wesentlichen radiusparallel verlaufenden Schacht einer Außenwandung der Fluidleitung einschiebbar ausgestaltet ist.

Diese Lösung ist konstruktiv einfach und ermöglicht die platzsparende Anbringung der Heizvorrichtung an der Fluidleitung, indem das Heizelement einfach in den Schacht der Außenwandung eingesteckt wird. Diese Lösung vereinfacht außerdem die Montage und Wartung, da das Heizelement mitsamt der Haltevorrichtung lediglich in die Tasche eingeschoben bzw. aus dieser Tasche entnommen werden muss.

Eine sichere und zu Wartungszwecken wiederholt lösbare Befestigung der Heizvorrichtung an der Fluidleitung wird in einer vorteilhaften Ausgestaltung dadurch erreicht, dass die Halteeinrichtung einen elastischen Klemmabschnitt aufweist, der zumindest abschnittsweise an die Außenwandung der Fluidleitung anlegbar ausgestaltet ist. Des weiteren kann zwischen dem Vorsprung und dem Klemmabschnitt eine Aussparung ausgebildet sein, in der zumindest abschnittsweise die Außenwandung der Fluidleitung aufnehmbar ist. Diese Aussparung ermöglicht es, dass sich die Heizvorrichtung raumsparend an die Fluidleitung anbringen lässt.

Alternativ kann auch vorgesehen sein, dass der Schacht selbst mit einem Vorsprung oder einer Ausnehmung versehen ist, die der Verrastung mit der Haltevorrichtung dient.

Der Querschnitt des Schachtes in Richtung im wesentlichen senkrecht zur Einschieberichtung des Vorsprunges kann in Form eines Vielecks, vorzugsweise eines Rechtecks ausgestaltet sein. Eine flache Seite des Vielecks kann dabei in Richtung des Innenraums der Fluidleitung weisen, so dass ein Wärmeübergang durch eine große Fläche gewährleistet ist. Der Vorsprung kann einen dem Schacht entsprechenden Querschnitt aufweisen. Zusätzlich können der Schacht und/oder der Vorsprung Codier-Elemente aufweisen, die ein Einsetzen des Vorsprunges in den Schacht lediglich in der Montagestellung zulassen.

Das Heizelement kann gemäß einer vorteilhaften Ausgestaltung bereits in der Halteeinrichtung vormontiert sein, so dass die Heizvorrichtung als eine Moduleinheit ausgestaltet ist. Eine solche vormontierte Moduleinheit lässt sich bei der Montage wesentlich leichter handhaben als separate Bauelemente, die erst im Schacht zusammengesetzt werden. Ebenso wird der Austausch der Heizvorrichtung bei Inspektionen erleichtert.

Durch die Verwendung eines PTC-Heizelements lassen sich kleine Bauformen bei gleichzeitig hoher Lebensdauer erreichen. Das PTC-Heizelement kann dabei zwischen zwei elektrisch leitenden Kontaktplatten angeordnet sein, die mit den Polen einer Stromquelle verbunden sind. Die Kontaktplatten können sich einstückig in Anschlusskontakten zu einem Steckverbinder fortsetzen, so dass auf die aufwendige Verlegung von zwischenliegenden elektrischen Leitungen verzichtet werden kann. Über einen solchen Steckverbinder kann eine externe Stromquelle, beispielsweise eine Autobatterie, zur Versorgung des Heizelements angeschlossen werden .

Der Steckverbinder kann einstückig von der Halteeinrichtung ausgebildet sein. Zu diesem Zweck kann die Halteeinrichtung vorzugsweise als Spritzgussteil hergestellt sein. Auf eine kostenintensive zusätzliche Isolierung der elektrischen Leitungen vom Steckverbinder zum Heizelement kann verzichtet werden, wenn die Halteeinrichtung aus einem elektrisch isolierenden Werkstoff, beispielsweise Kunststoff, gefertigt ist. Auf diese Weise können die Leitungen vom Heizelement zum Steckverbinder ohne isolierende Schutzschicht direkt in der Halteeinrichtung verlegt werden.

Um die Montage der Heizvorrichtung an der Fluidleitung zu erleichtern und während des Montagevorgangs Beschädigungen zu vermeiden, kann die Halteeinrichtung wenigstens ein Führungselement aufweisen, durch das die Halteeinrichtung beim Einschieben in den Schacht in Einschieberichtung geführt ist.

Erfindungsgemäß ist die Fluidleitung durch konstruktive Maßnahmen an die Verwendung der Heizvorrichtung nach einer der obigen Ausgestaltungen angepasst. Hierzu kann die Fluidleitung mit einem im wesentlichen rohrförmigen Leitungsabschnitt, der von einer Außenwand umgeben ist, versehen sein. Um den Vorsprung der Halteeinrichtung und das Heizelement der Heizvorrichtung aufzunehmen, ist ein Schacht vorgesehen, dessen zumindest eine Schachtwand an den Innenraum der Fluidleitung angrenzt und in dem ein Heizelement und eine Halteeinrichtung aufnehmbar sind. Der Schacht kann sich im wesentlichen radiusparallel oder in Längsrichtung der Fluidleitung in der Außenwand erstrecken. Auf eine aufwendige Abdichtung des Schachtes gegenüber dem Innenraum der Fluidleitung kann verzichtet werden, wenn der Schacht durch die Außenwand vom Innenraum der Fluidleitung getrennt ist.

Der Schacht kann zwischen einer den Innenraum der Fluidleitung zugewandten Innenfläche und einer nach außen weisenden Außenfläche der Außenwand eingeformt sein. Aufgrund der verminderten Wandstärke wird so eine verbesserte Wärmeleitung vom Schacht zum Innenraum der Fluidleitung erreicht.

Die Schachtwände können einen Vorsprung bilden, der in den Innenraum der Fluidleitung ragt und vom Fluid im Betrieb umströmt ist. Auf diese Weise findet auf beiden Seiten des in den Schacht eingesetzten Heizelements ein Wärmeübergang in das Fluid statt.

Der Vorsprung kann auch zu einer Trennwand verlängert sein, so dass der Innenraum der Fluidleitung in zwei im wesentlichen getrennte Strömungsbereiche unterteilt ist, die zu beiden Seiten des Schachtes verlaufen. Auch bei dieser Ausgestaltung wird eine Umströmung der Schachtwände erreicht.

Um durch den Schacht eine mechanische Schwächung der Außenwand der Fluidleitung zu vermeiden und gleichzeitig die Baugröße klein zu halten, kann die dem Innenraum der Fluidleitung zugewandte Innenfläche der Außenwand einen im wesentlichen planen Abschnitt aufweisen. Im Bereich des planen Abschnittes ist die Stärke der Außenwand bei einer Fluidleitung mit ansonsten kreisförmigem Strömungsquerschnitt erhöht, ohne dass sich der Außendurchmesser der Fluidleitung vergrößert.

Ferner kann die Außenwand wenigstens ein Führungselement aufweisen, durch das die Heizvorrichtung in einer Einschieberichtung bei der Montage oder bei der Entnahme geführt ist. Ein solches Führungselement verhindert das Verrutschen der Heizvorrichtung auf der Fluidleitung. An der Heizvorrichtung kann wenigstens ein entsprechendes Führungselement vorgesehen sein, das mit dem wenigstens einen Führungselement an der Fluidleitung an der Vorrichtung zusammenwirkt. Als Führungselement ist beispielsweise eine sich in Richtung des Schachtes erstreckende Nut möglich.

Um einen guten Wärmeübergang zwischen dem Heizelement und der Außenwand der Fluidleitung zu erreichen, ist es von Vorteil, wenn zwischen dem Heizelement und der Fluidaußenwand ein möglichst guter und großflächiger Kontakt besteht. Dieser Kontakt kann beispielsweise durch ein Federelement erreicht werden, das das Heizelement gegen die Außenwand drückt. Ein solches Federelement kann von der Halteeinrichtung aufgenommen sein und sich im eingebauten Zustand an dieser abstützen. Bei Ausgestaltung als Moduleinheit kann das Federelement ebenfalls vormontiert sein.

Alternativ oder zusätzlich zum Andrücken des Heizelements durch das Federelement kann das Heizelement auch durch eine plastische Verformung der Fluidleitung und des Schachtes gegen die Außenwand gedrückt werden. Eine kontrollierte und örtliche begrenzte plastische Verformung wird durch Schwächungsbereiche in der Außenwand erreicht, in denen die mechanische Festigkeit gegenüber der Umgebung verringert ist. Ein solcher Schwächungsbereich führt zu einer Konzentration der Verformung in seiner Umgebung.

Die Wirkung der plastischen Verformung kann insbesondere auf den Schacht begrenzt werden, wenn der Schwächungsbereich im Bereich des Schachtes, insbesondere radial überlappend mit dem Schacht, angeordnet ist.

Von Vorteil ist es dabei, die Führungselemente in einer Doppelfunktion gleichzeitig als Schwächungsbereiche zu nutzen.

Um über den gesamten Strömungsquerschnitt der Fluidleitung die vom Heizelement ausgestrahlte Wärmeenergie zu verteilen, kann die Fluidleitung aus einem wärmeleitfähigen Metallwerkstoff hergestellt sein, beispielsweise aus Aluminium- oder KupferRohren oder aus Rohren, die aus Aluminium- oder Kupfer-Legierungen bestehen.

Die erfindungsgemäße Heizvorrichtung und die entsprechend angepasste Fluidleitung können als Bausatz zur nachträglichen Ausrüstung von Verbrennungskraftmaschinen bereitgestellt werden:

Im zusammengesetzten Zustand bildet die erfindungsgemäße Heizvorrichtung und die erfindungsgemäße Fluidleitung ein Heizungsmodul, das in eine Kurbelgehäuseentlüftung eingebaut werden kann.

Im folgenden wird die Erfindung anhand von Ausführungsformen mit Bezug auf die Zeichnungen beispielhaft erläutert. Für gleiche oder ähnliche Bauelemente werden dabei gleiche Bezugszeichen verwendet. Die bei den einzelnen Ausführungsformen unterschiedlichen Elemente können miteinander beliebig kombiniert werden.

Es zeigen:
- Fig. 1: eine erste Ausführungsform der Erfindung umfassend eine Halteeinrichtung, ein Heizelement und eine Fluidleitung in einer Explosionsansicht;
- Fig. 2: die Ausführungsform der Fig. 1 im zusammengebauten Zustand in einer Draufsicht;
- Fig. 3: die Ausführungsform der Fig. 1 im zusammengebauten Zustand in einer Seitenansicht;
- Fig. 4.: die Ausführungsform der Fig. 1 im zusammengebauten Zustand in einer Ansicht auf die Stirnseite;
- Fig. 5: eine Ansicht entlang der Ebene V-V der Fig. 3;
- Fig. 6: eine zweite Ausführungsform der Erfindung in einer Ansicht auf die Stirnseite;
- Fig. 7: eine Ansicht der Ausführungsform der Fig. 6 in einer Draufsicht;
- Fig. 8: die Ausführungsform der Fig. 6 in einem Schnitt entlang der Ebene VIII-VIII der Fig. 9;
- Fig. 9: die Ausführungsform der Fig. 6 in einer Ansicht entlang der Ebene des Schnittes IX-IX der Fig. 8;
- Fig. 10: eine Fluidleitung einer dritten Ausführungsform der Erfindung in einer perspektivischen Ansicht;
- Fig. 11: die Fluidleitung der Fig. 10 in einer weiteren perspektivischen Ansicht;
- Fig. 12: die Fluidleitung der Fig. 10 in einem Längsschnitt quer zu einer Trennwand;
- Fig. 13: die Fluidleitung der Fig. 10 in einem Längsschnitt in einer Ebene senkrecht zur Ebene des Längsschnittes der Fig. 12.

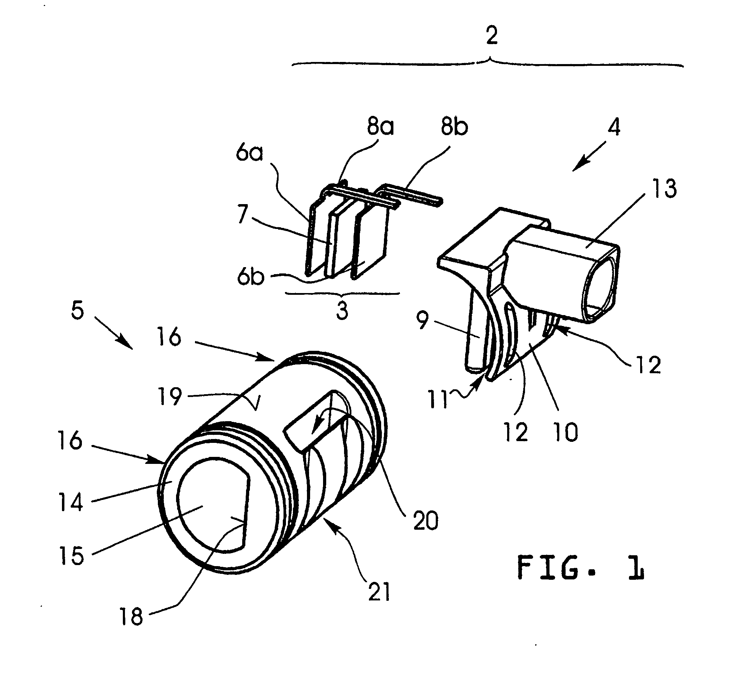

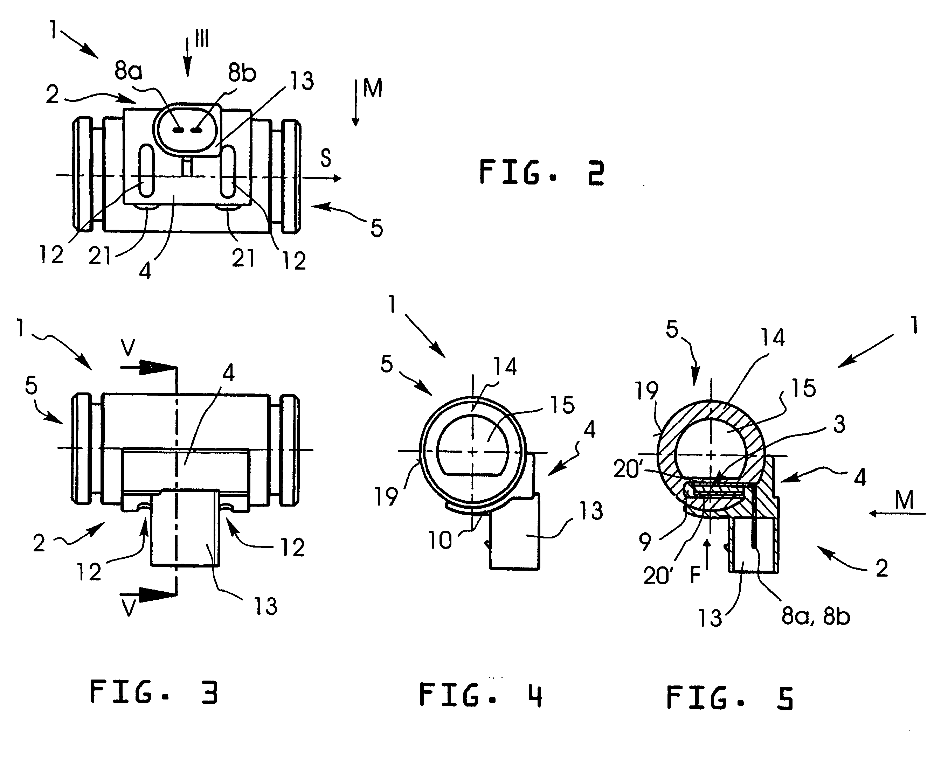

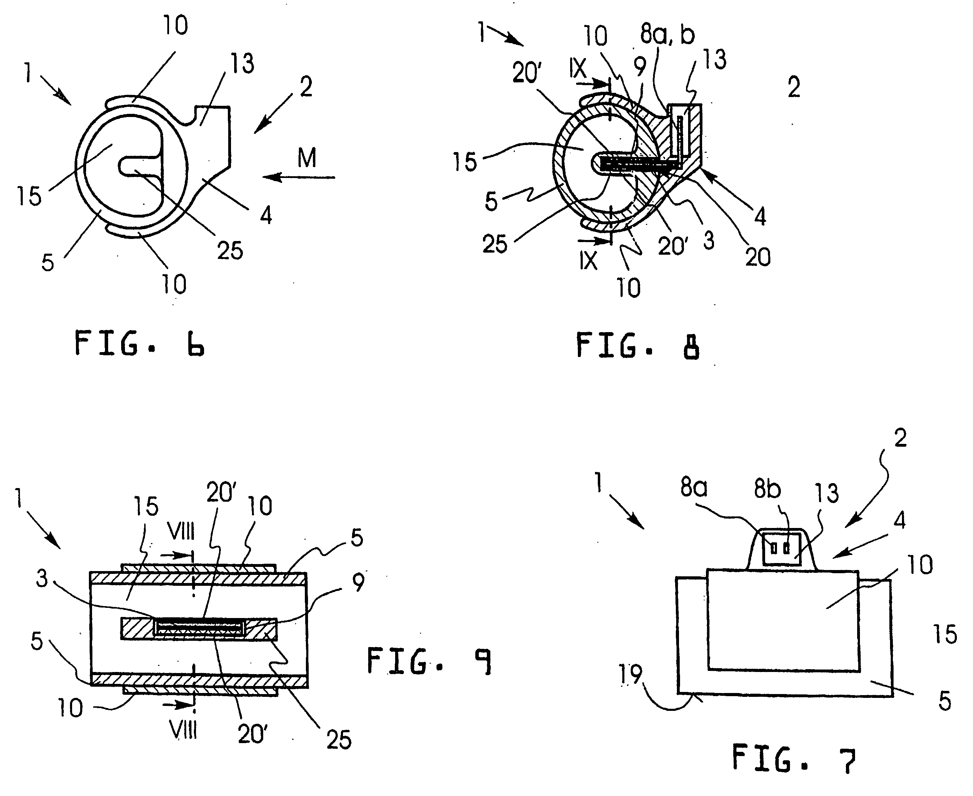

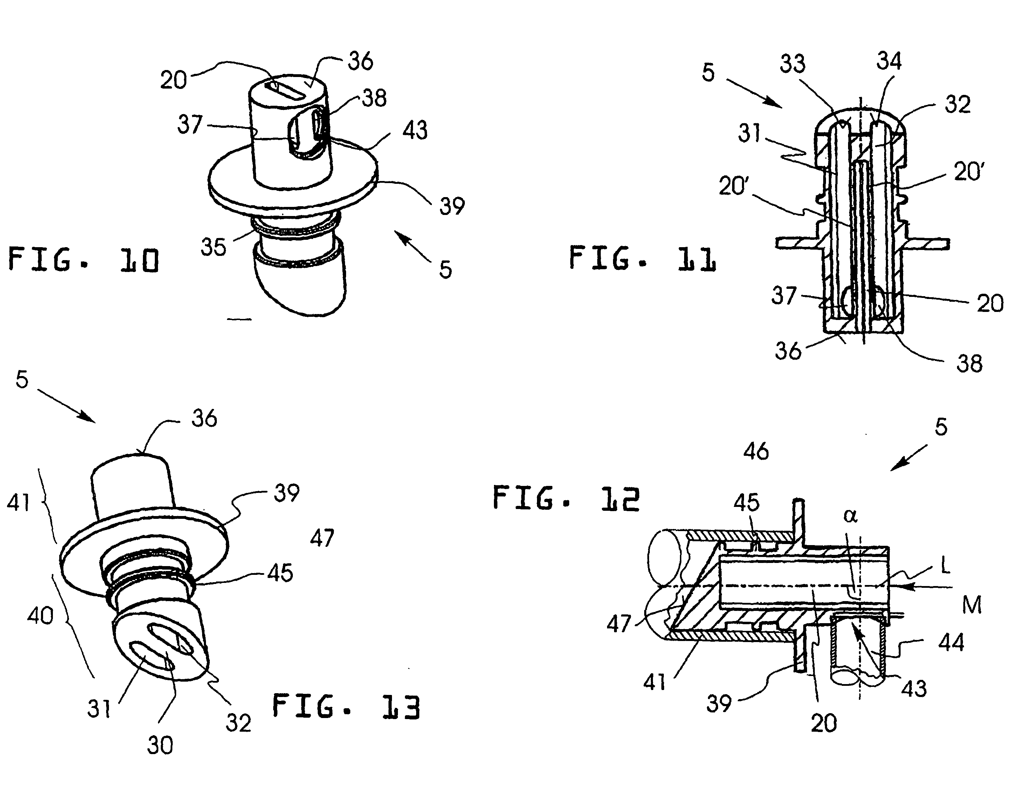

Zunächst werden der Aufbau einer ersten Ausführungsform eines erfindungsgemäßen Heizmoduls für eine Kurbelgehäuseentlüftung einer Verbrennungskraftmaschine anhand der Explosionsdarstellung der Fig. 1 erläutert

Das Heizmodul 1 weist eine Heizvorrichtung 2 auf, die ein Heizelement 3 und eine Halteeinrichtung 4 umfasst. Zum Heizmodul 1 gehört außerdem eine Fluidleitung 5, an der die Heizvorrichtung 2 befestigbar ist.

Das Heizelement 3 ist bei der Ausführungsform gemäß Fig. 1 als ein zwischen zwei Kontaktplatten 6a, 6b angeordnetes PTC Heizelement 7 ausgebildet. Die Kontaktplatten 6a, 6b setzen sich jeweils einstückig in Kontaktfahnen 8a und 8b auf, die jeweils um 90 ° gegenüber der Ebene der jeweiligen Kontaktplatte 6a, 6b umgebogen sind.

Die Halteeinrichtung 4 weist einen nasenförmigen Vorsprung 9 auf, in dem (in Fig. 1 nicht zu erkennen) das Heizelement 3 aufnehmbar ist. Ferner weist die Haltevorrichtung 4 einen Klemmabschnitt 10 auf, der durch eine Aussparung 11 vom Vorsprung 9 getrennt ist. Bei der Ausführungsform der Fig. 1 ist der Klemmabschnitt 10 als eine in Richtung des Vorsprungs 9 elastisch federnde Zunge ausgebildet. Er kann aber auch als Rastvorrichtung an anderer Stelle, beispielsweise am Vorsprung 9, ausgebildet sein.

Der Klemmabschnitt 10 erstreckt sich bei der Ausführungsform der Fig. 1 kreissegmentförmig über den Vorsprung 9. Im Bereich des Klemmabschnittes 10 ist wenigstens ein Führungselement 12 vorgesehen. Bei der Ausführungsform der Fig. 1 sind zwei Führungselemente 12 vorgesehen. Das Führungselement 12 ist hier als eine in Richtung des Vorsprunges 9 sich erstreckende, längliche und in Richtung des Vorsprungs 9 weisende Ausbuchtung ausgestaltet.

Schließlich weist Halteeinrichtung 4 einen Steckverbindungsabschnitt 13 auf, der mit einem Steckverbinder (in Fig. 1 nicht dargestellt) zur elektrischen Versorgung des Heizelements 3 verbunden werden kann.

Wie in der Fig. 1 zu erkennen ist, ist die Halteeinrichtung 4 als ein Gussformteil hergestellt, an dem der Vorsprung 9, der Klemmabschnitt 10 und die Aussparung 11 einstückig angeformt sind. Die Halteeinrichtung 4 kann insbesondere spritzgegossen sein. Als Werkstoff für die Halteeinrichtung 4 ist ein elektrisch isolierendes Material, wie beispielsweise ein Kunststoff, vorgesehen.

Die Fluidleitung 5 ist im wesentlichen rohrförmig ausgestaltet und weist eine Außenwand 14 auf, die einen Innenraum 15, in dem die Gase beispielsweise aus einem Kurbelgehäuse strömen, umgibt. An den beiden in Längsrichtung liegenden Enden des Fluidleitungsstückes 5 ist jeweils ein Befestigungsabschnitt 16 angeordnet, über die das Fluidleitungsstück 5 mit einer Verbrennungskraftmaschine verbunden werden kann.

Die dem Innenraum 15 zugewandte Innenfläche 17 der Außenwand 14 bildet in einem Bereich eine plane Fläche 18, so dass zwischen der Fläche 18 und der Außenfläche 19 der Außenwand 14 ein Bereich größerer Wanddicke entsteht.

In der Außenwand 14 zwischen der Innenfläche 17 und der im wesentlichen kreiszylindrischen Außenfläche 19 erstreckt sich ein Schacht 20, der so bemessen ist, dass er den Vorsprung 9 der Halteeinrichtung 4 mit eingesetztem Heizelement 3 aufnimmt. Die Schachtwände 20' werden bei der Ausführungsform der Fig. 1 bis 6 von der Außenwand 14 gebildet.

Der Schacht 20 weist in Richtung quer zur Montagerichtung M einen Vieleck-Querschnitt auf, wobei eine flache Seite des Vielecks dem Innenraum 15 zugewandt ist. Das im wesentlichen plattenförmige Heizelement 3 liegt an dieser flachen Seite an. Der Vorsprung 9 weist einen dem Querschnitt des Schachtes 20 entsprechenden Querschnitt auf, beispielsweise wie bei der Ausführungsform der Fig. 1 bis 6 einen Rechteck-Querschnitt.

Wie in der Fig. 1 zu erkennen ist, öffnet sich der Schacht 20 im wesentlichen in radiusparalleler Richtung, d.h. versetzt von der Mittenebene der Fluidleitung 3 quer zur Längserstreckung der Fluidleitung. Bei der Ausführungsform der Fig. 1 ist der Schacht 20 zudem zwischen der planen Fläche 18 der Innenfläche 17 sowie der Außenfläche 19 im Bereich erhöhter Wandstärke angeordnet und erstreckt sich parallel zur planen Fläche 18.

In radialer Richtung überlappend mit dem Schacht 20 ist in der Außenfläche 19 der Außenwand 14 wenigstens ein Schwächungsbereich 21 vorgesehen. Wie in Fig. 1 zu erkennen ist, weist die dort dargestellte Ausführungsform zwei Schwächungsbereiche 21 auf.

Die beiden Schwächungsbereiche 21 sind so angeordnet, dass sie mit den Führungselementen 12 der Haltevorrichtung 4 zusammenwirken und die Haltevorrichtung 4 beim Einschieben des Vorsprunges 9 in die Tasche 20 führen. Hierzu sind die Schwächungsbereiche 21 bei der Ausführungsform der Fig. 1 als sich radiusparallel und parallel zur planen Fläche 18 erstreckende Nuten ausgestaltet.

Die Fluidleitung 5 ist aus einem wärmeleitfähigen Material, wie beispielsweise Aluminium, Kupfer, einer Aluminiumlegierung oder einer Kupferlegierung gefertigt.

Im folgenden wird die Anordnung der Heizvorrichtung 2 und der Fluidleitung 5 im zusammengebauten Heizmodul 1 anhand der Fig. 2 bis 5 erläutert.

Um das Heizungsmodul zusammen zu bauen, wird zunächst das Heizelement 3 in eine Ausnehmung des Vorsprunges 9 eingesetzt, so dass das Heizelement 3 und die Halteeinrichtung 4 eine Moduleinheit bilden, die in eine Montagerichtung M in den Schacht 20 der Fluidleitung 5 eingeschoben wird. Wie in der Fig. 2 zu erkennen ist, setzen sich bei zusammengesetztem Heizelement 3 und Halteeinrichtung 4 die Kontaktabschnitte 8a, 8b bis in den Steckverbindungsabschnitt 13 fort, wo sie von einem Stecker (nicht gezeigt) kontaktiert werden können.

Die Montagerichtung M, in der die Heizvorrichtung 2 in die Fluidleitung 5 eingesetzt wird, verläuft in Richtung des Schachtes 20, d.h. im wesentlichen quer zur Strömungsrichtung S des Fluides in der Fluidleitung 5. Da die Montagerichtung M, und damit auch eine mögliche Demontagerichtung, quer zur Strömungsrichtung S und damit quer zur Längserstreckung der Fluidleitung 5 verläuft, ist eine Montage und Demontage der Halteeinrichtung 4 auch bei einer fest montierten Fluidleitung, beispielsweise an einem Motorblock oder an weiteren Leitungsabschnitten, möglich.

Beim zusammengebauten Heizmodul 1 liegt der Klemmabschnitt 10 mit seiner dem Vorsprung 9 zugewandten Fläche an der Außenfläche 19 des Fluidleitungsstückes 5 an, wie in der Fig. 4 zu erkennen ist. Der Klemmabschnitt 10 erstreckt sich dabei so um den Umfang der Fluidleitung 5, dass er während des Einschiebens des Vorsprunges 9 in Schacht 20 plastisch weggedrückt wird und in der vollständig eingeschobenen Endposition zurückfedert und so die Halteeinrichtung 4 am Fluidelement 5 verrastet. Die Führungselemente 12, 21 der Heizvorrichtung 2 und der Fluidleitung 5 greifen dabei ineinander und führen die Heizvorrichtung 2 so in Montagerichtung M, dass die Heizvorrichtung 2 bei der Montage nicht Abrutschen oder Verkanten kann.

In der Fig. 3 ist zu erkennen, dass sich die Führungselemente 12 der Heizvorrichtung 2 zu den beiden Seiten des Steckverbindungsabschnittes 13 erstrecken. Dadurch kann in diesem Bereich das Heizmodul 1 durch beispielsweise eine Zange umgriffen und durch Zusammendrücken verformt werden. Die gleichzeitig als Schwächungsbereiche dienenden Führungselemente 21 der Fluidleitung 5 konzentrieren die plastische Verformung auf den Bereich des Schachtes, so dass der Vorsprung 9 mit dem darin aufgenommenen Heizelement 3 in dem Schacht 20 verpresst wird. Die Verpressung stellt einen stabilen und großflächigen Berührungskontakt des Heizelements 3 mit der Fluidleitung 5 und damit einen guten Wärmeübergang sicher.

Dies ist anhand der Schnittdarstellung der Fig. 5 besonders deutlich zu erkennen. Durch Ausüben einer Kraft F auf die Führungselemente 12 wird das in einer Ausnehmung des Vorsprungs 9 aufgenommene Heizelement 3 im Schacht 20 an die Außenwand 14 der Fluidleitung 5 gedrückt.

Ferner ist in der Fig. 5 zu erkennen, dass der Abschnitt der Führungswand 14 zwischen dem Schacht 20 und der Außenfläche 19 der Fluidleitung 5 in der Aussparung 11 zwischen dem Vorsprung 9 und dem Klemmabschnitt 10 aufgenommen ist. Da der Klemmabschnitt 10 in Montagerichtung M die Außenwand 14 hintergreift, ist die Heizvorrichtung 2 durch Formschluss gegen ein unbeabsichtigtes Entfernen aus der Fluidleitung 5 gesichert.

In der Schnittdarstellung der Fig. 5 ist ferner zu erkennen, dass sich die Kontaktabschnitte 8a, 8b durch die Halteeinrichtung 4 hindurch zum Steckverbindungsabschnitt 13 erstrecken.

Da der Schacht 20 in der Außenwand 14 endet und durch die Außenwand 14 vom Innenraum 15 der Fluidleitung 5 getrennt ist, entfallen Maßnahmen zur Abdichtung des Steckverbindungsabschnittes 13 gegenüber dem Innenraum 15.

Aufgrund der einstückigen Ausgestaltung bildet die Halteeinrichtung 4 ein Gehäuse sowohl für das Heizelement 3 als auch für den Steckverbindungsabschnitt 13 aus.

Obwohl bei der oben dargestellten Ausführungsform der Steckverbindungsabschnitt 13 sich im wesentlichen senkrecht zur Montagerichtung M erstreckt, kann in einer Abänderung auch ein Steckverbindungsabschnitt 13 vorgesehen sein, der sich in Montagerichtung M erstreckt. Allerdings wirkt in diesem Fall die Zugkraft zum Lösen des Steckverbinders in Montagerichtung M, was zu einem Lockern oder gar Lösen der Heizvorrichtung 2 führen kann.

Außerdem kann anstelle oder zusätzlich zur plastischen Verformung der Außenwand 14 im Bereich des Schachtes 20 ein Federelement vorgesehen sein, durch das das Heizelement 3 im Schacht 20 gegen die Außenwand 14 in Richtung des Innenraums 15 gedrückt ist. Eine solche Feder kann beispielsweise zwischen dem Heizelement 3 und dem Vorsprung 9 angeordnet sein. Um zusätzliche Bauteile zu sparen, kann das Federelement durch die zwischen dem PTC-Heizelement 7 und dem Vorsprung 9 angeordnete Kontaktplatte 6b gebildet sein.

Des weiteren kann auf das an der Fluidleitung 5 anliegenden Kontaktblech 6a verzichtet werden, wenn die Fluidleitung 5 als Kontakt für das PTC-Heizelement dient.

Die Fluidleitung 5 kann einen beliebigen Strömungsquerschnitt sowie eine beliebige äußere Querschnittsform aufweisen.

In den Fig. 6 bis 9 ist ein weiteres Ausführungsbeispiel einer erfindungsgemäßen Heizvorrichtung 2 gezeigt, das im zusammengesetzten Zustand mit der Fluidleitung 5 ein Heizmodul 1 bildet und ebenfalls als vormontierte Moduleinheit an der Fluidleitung 5 angebracht werden kann. Im folgenden wird der Einfachheit halber lediglich auf die Unterschiede zu dem Ausführungsbeispiel der Fig. 1 bis 5 eingegangen.

Im Unterschied zum Ausführungsbeispiel der Fig. 1 bis 5 erstreckt sich der Schacht 20 nicht zwischen dem Innenraum 15 und der Außenwand 19 der Fluidleitung 5, sondern ist innerhalb eines Vorsprunges 25 angeordnet, der radiusparallel oder radial in den Innenraum 15 ragt, so dass die Schachtwände 20' im Betrieb vom Fluid umströmt sind. Der Vorsprung 9 der Halteeinrichtung 4 ist in den Vorsprung 20 eingeschoben. Der Vorsprung kann auch als Trennwand ausgebildet sein, wie weiter unten anhand eines weiteren Ausführungsbeispiels erläutert wird.

Die Befestigung des Halteelements 2 an der Fluidleitung 5 kann, ähnlich wie beim Ausführungsbeispiel der Fig. 1 bis 5, durch Klemmabschnitte 10 erfolgen, die, wie in den Fig. 6 bis 9 zu erkennen ist, die Fluidleitung 5 auf beiden Seiten umgreifen.

Im übrigen entspricht der Aufbau des Heizmoduls der Fig. 6 bis 9 im wesentlichen dem Aufbau des Ausführungsbeispiels der Fig. 1 bis 5.

In den Fig. 10 bis 13 ist ein weiteres Ausführungsbeispiel einer Fluidleitung 5 gezeigt, das mit einer in diesen Figuren der Einfachheit halber nicht dargestellten Heizeinrichtung ebenfalls zu einem Heizmodul zusammensetzbar ist.

Im Unterschied zu den vorangegangenen Ausführungsbeispielen ist die Fluidleitung 5 bei der Ausführungsform der Fig. 10 bis 13 als ein Winkelstück ausgebildet, in dem die Fluidströmung um einen vorbestimmten Winkel α, hier 90 °, umgelenkt wird. Dabei sind auch andere Winkel möglich.

Ferner ist beim Ausführungsbeispiel der Fig. 10 bis 13 der Innenraum des Fluidleitungsstückes 5 durch eine Trennwand 30 in zwei Strömungsbereiche 31, 32 unterteilt.

Die beiden Strömungsbereiche 31, 32 erstrecken sich in Längsrichtung L der Fluidleitung 5 von jeweils einlassseitigen Öffnungen 33, 34 bis zu einem Boden 36. Im Bereich des Bodens 36 münden quer zur Längsrichtung L der Fluidleitung 5 Auslassöffnungen 37, 38.

Wie insbesondere in der Fig. 12 zu erkennen ist, mündet ein sich in Längsrichtung L der Fluidleitung 5 in der Trennwand 30 erstreckender Schacht im Boden 36 der Fluidleitung 5. Der Schacht 20 ist zur Aufnahme einer Heizvorrichtung 2 ausgebildet, so dass in ihm ein PTC-Heizelement zu liegen kommt. Die Schachtwände 20' bilden die Trennwand 30 und sind im Betrieb vom Fluid umströmt.

Der Schacht 20 öffnet sich in Längsrichtung L der Fluidleitung, so dass die Montageeinrichtung M, in der eine Heizvorrichtung in die Fluidleitung 5 eingeschoben wird, parallel zur Längsrichtung L verläuft.

Die Fluidleitung 5 ist ferner mit einem Kragen 39 versehen, der die Fluidleitung 5 in einen ersten Bereich 40, der in ein Rohr 44 (vgl. Fig. 12) oder einen Schlauch dichtend einsetzbar ist, und in einen zweiten Bereich 42 unterteilt. Der zweite Bereich 41 ist im Bereich der Auslassöffnungen 37, 38 mit einem Aufnahmeabschnitt 43 versehen, an dem ein weiteres Rohr 44 oder ein weiterer Schlauch dichtend mit den Auslassöffnungen 37, 38 verbunden werden kann.

In der Fig. 12 ist die Fluidleitung 5 schematisch im eingebauten Zustand mit zwei Fluidleitungen 41, 44 gezeigt. Wie in dieser Figur zu erkennen ist, dient der Kragenabschnitt 39 als Anschlagfläche für die eine Leitung 41. Gleichzeitig ist im Bereich 40 ein Dichtvorsprung 45 vorgesehen, der nach radial außen vorspringt und dichtend mit der Innenfläche der Leitung 44 zusammenwirkt. Um die Dichtigkeit der Verbindung zwischen dem Fluidleitungsstück 5 und der Leitung 44 zu erhöhen, ist vor dem Kragen 39 ein weiterer dichtender Ansatz 46 vorgesehen, der sich vom Kragen 39 in Längsrichtung L beabstandet vom Dichtvorsprung 45 in Richtung der Einlassöffnungen 33, 34 erstreckt.

Ferner ist in der Fig. 13 zu erkennen, dass die zweite Leitung 40 mit dem Aufnahmeabschnitt 42 der Fluidleitung 5 verbunden ist.

Die gegenüber der Längsrichtung L schräg verlaufende Einlassfläche 46 erleichtert das Einsetzen der Fluidleitung 5 in die Leitung 44.

Bei den beiden Ausführungsbeispielen der Fig. 6 bis 13 ragt der Schacht 20 zur Aufnahme des Heizelements in den Strömungsquerschnitt, so dass das Heizelement im Betrieb von den Gasen umströmt wird. Auf diese Weise kann der Wärmetransport zum Fluid verbessert werden.

Durch die schachtförmige Ausgestaltung ist der Innenbereich des Schachtes 20 nicht mit dem Strömungsquerschnitt der Fluidleitung 5 fluidleitend verbunden, so dass auf aufwendige Abdichtungen der Heizeinrichtung 2 gegenüber dem Strömungsquerschnitt der Fluidleitung 5 verzichtet werden kann.

Sämtliche gezeigten Ausführungsformen sind insbesondere für Kurbeigehäuseentlüftungen vorgesehen, in denen Blowby-Gase aus dem Kurbelgehäuse beispielsweise zu einer Lufteinlassleitung einer Verbrennungskraftmaschine geleitet werden. Die gezeigten und beschriebenen Ausführungsformen können aber grundsätzlich überall dort eingesetzt werden, wo strömende Fluide erwärmt werden sollen. Solche Fluide können Gase oder Flüssigkeiten sein.

## Patentansprüche

1. Heizvorrichtung (2) für eine Fluidleitung (5), insbesondere zur Kurbelgehäuseentlüftung einer Verbrennungskraftmaschine, mit einem Heizelement (3) und mit einer Haltevorrichtung (4), durch die das Heizelement an der Fluidleitung befestigbar ist, **dadurch gekennzeichnet, dass** die Halteeinrichtung einen Vorsprung (9) aufweist, in dem das Heizelement aufnehmbar ist und der in einen Schacht (20) mit einer an den Innenraum (15) der Fluidleitung (5) angrenzenden Schachtwand (14, 20', 30) der Fluidleitung (5) einschiebbar ausgestaltet ist.

2. Heizvorrichtung (2) nach Anspruch 1, **dadurch gekennzeichnet, dass** die Halteeinrichtung einen elastischen Klemmabschnitt (10) aufweist, der zumindest abschnittsweise an die Außenwand (14) der Fluidleitung anlegbar ausgestaltet ist.

3. Heizvorrichtung (2) nach Anspruch 2, **gekennzeichnet durch** eine zwischen dem Vorsprung (9) und dem Klemmabschnitt (10) ausgebildete Aussparung (11), in der zumindest abschnittsweise die Außenwandung (14) der Fluidleitung (5) aufnehmbar ist.

4. Heizvorrichtung (2) nach einem der oben genannten Ansprüche, **dadurch gekennzeichnet, dass** die Heizvorrichtung (2) als eine Moduleinheit ausgestaltet ist, in der das Heizelement (3) in der Halteeinrichtung (4) vormontiert ist.

5. Heizvorrichtung (2) nach einem der oben genannten Ansprüche, **dadurch gekennzeichnet, dass** das Heizelement (3) im wesentlichen plattenförmig ausgestaltet ist.

6. Heizvorrichtung (2) nach einem der oben genannten Ansprüche, **dadurch gekennzeichnet, dass** der Vorsprung (9) im wesentlichen quer zur Montagerichtung einen Vieleck-Querschnitt aufweist, wobei eine flache Seite des Vielecks einem Innenraum (15) zugewandt ist.

7. Heizvorrichtung (2) nach einem der oben genannten Ansprüche, **dadurch gekennzeichnet, dass** das Heizelement (3) ein PTC-Heizelement (7) umfasst.

8. Heizvorrichtung (2) nach Anspruch 7, **dadurch gekennzeichnet, dass** das PTC-Heizelement (7) zwischen zwei elektrisch leitenden Kontaktplatten (6a, 6b) angeordnet ist, die sich in Anschlusskontaktfahnen (8a, 8b) zu einem Steckverbinder fortsetzen.

9. Heizvorrichtung (2) nach einem der oben genannten Ansprüche, **dadurch gekennzeichnet, dass** die Halteeinrichtung (4) wenigstens ein Führungselement (12) aufweist, das die Halteeinrichtung (4) bei Einschieben in die Fluidleitung (5) in eine Einschieberichtung (M) führend ausgestaltet ist.

10. Heizvorrichtung (2) nach einem der oben genannten Ansprüche, **dadurch gekennzeichnet, dass** die Haltevorrichtung (4) aus einem elektrisch isolierten Werkstoff gefertigt ist.

11. Bausatz für ein Heizungsmodul (1) für Fluidleitungen, insbesondere zur Kurbelgehäuseentlüftung einer Verbrennungskraftmaschine, mit einer im wesentlichen rohrförmigen Fluidleitung (5) und mit einer an der Fluidleitung befestigbaren Heizvorrichtung (2), **dadurch gekennzeichnet, dass** die Heizvorrichtung (2) nach einem der Ansprüche 1 bis 8 ausgestaltet ist.

12. Fluidleitung (5), insbesondere zur Kurbelgehäuseentlüftung einer Verbrennungskraftmaschine, mit einem im wesentlichen rohrförmigen Leitungsabschnitt, der von einer Außenwand (14) umgeben ist, **gekennzeichnet durch** einen Schacht (20), dessen zumindest eine Schachtwand (14, 20', 30) an den Innenraum (15, 31, 32) der Fluidleitung (5) grenzt und der ein Heizelement und eine Halteeinrichtung, **durch** die das Heizelement an der Fluidleitung befestigbar ist, einschiebbar aufnehmend ausgestaltet ist.

13. Fluidleitung (5) nach Anspruch 12, **dadurch gekennzeichnet, dass** der Schacht als zwischen einer dem Innenraum (15) der Fluidleitung (5) zugewandten Innenfläche und einer nach außen weisenden Außenfläche der Außenwand (14) eingeformt ist.

14. Fluidleitung (5) nach Anspruch 12 oder 13, **dadurch gekennzeichnet, dass** der Schacht (20) in einem Bereich angeordnet ist, in dem die Wandstärke der Außenwand (14) gegenüber umgebenden Bereichen erhöht ist.

15. Fluidleitung (5) nach einem der Ansprüche 12 bis 14, **dadurch gekennzeichnet, dass** sich der Schacht (20) im wesentlichen in radiusparalleler Richtung öffnet.

16. Fluidleitung (5) nach einem der Ansprüche 12 bis 15, **dadurch gekennzeichnet, dass** sich der Schacht (20) im wesentlichen in Längsrichtung der Fluidleitung (5) öffnet.

17. Fluidleitung (5) nach einem der Ansprüche 12 bis 16, **dadurch gekennzeichnet, dass** sich die Schachtwände in den Innenraum (15) der Fluidleitung im Betrieb vom Fluid umströmbar erstrecken.

18. Fluidleitung (5) nach Anspruch 17, **dadurch gekennzeichnet, dass** die Schachtwände einen in den Innenraum (15) ragenden Vorsprung bilden.

19. Fluidleitung (5) nach Anspruch 17, **dadurch gekennzeichnet, dass** die Schachtwände eine Trennwand (32) ausbilden, die den Innenraum (15) des Fluidleitungsstückes in voneinander im wesentlichen getrennte Strömungsbereiche unterteilt.

20. Fluidleitung (5) nach einem der Ansprüche 12 bis 19, **dadurch gekennzeichnet, dass** der Schacht (20) in Richtung im wesentlichen quer zur Montagerichtung einen Vieleck-Querschnitt aufweist, wobei wenigstens eine flache Seite des Vielecks dem Innenraum (15) zugewandt ist.

21. Fluidleitung (5) nach einem der Ansprüche 12 bis 20, **dadurch gekennzeichnet, dass** die dem Innenraum der Fluidleitung zugewandte Innenfläche der Außenwand (14) einen im wesentlichen planen Abschnitt (18) aufweist.

22. Fluidleitung (5) nach einem der Ansprüche 12 bis 21, **dadurch gekennzeichnet, dass** die Außenwand (14) wenigstens ein Führungselement (21) aufweist, durch das die Heizvorrichtung in einer Einschieberichtung (M) führbar ist.

23. Fluidleitung (5) nach Anspruch 22, **dadurch gekennzeichnet, dass** die Führungseinrichtung (21) wenigstens eine Nut umfasst.

24. Fluidleitung (5) nach einem der Ansprüche 12 bis 23, **dadurch gekennzeichnet, dass** die Außenwand (14) wenigstens einen Schwächungsbereich (21) aufweist, durch den bei Krafteinwirkung (F) eine im wesentlichen lokal begrenzte Verformung des Schachtes (20) bewirkbar ist.

25. Fluidleitung (5) nach Anspruch 24, **dadurch gekennzeichnet, dass** der Schwächungsbereich (21) im wesentlichen nutförmig ausgestaltet ist.

26. Fluidleitung (5) nach Anspruch 24 oder 25, **dadurch gekennzeichnet, dass** der Schwächungsbereich (21) in der Außenfläche (19) der Außenwand (14) ausgebildet ist.

27. Fluidleitung (5) nach einem der Ansprüche 24 bis 26, **dadurch gekennzeichnet, dass** der Schwächungsbereich (21) sich in radialer Richtung mit dem Schacht (20) überlappt.

28. Fluidleitung (5) nach einem der Ansprüche 12 bis 27, **dadurch gekennzeichnet, dass** die Fluidleitung (5) aus einem wärmeleitfähigem Metallwerkstoff hergestellt ist.

29. Fluidleitung (5) nach einem der Ansprüche 12 bis 28, **dadurch gekennzeichnet, dass** der Schacht (20) durch die Außenwand (14) vom Innenraum (15) der Fluidleitung getrennt ist.

30. Fluidleitung (5) nach einem der Ansprüche 12 bis 29, **dadurch gekennzeichnet, dass** die Fluidleitung (5) als ein Winkelelement ausgestaltet ist, in dem die Strömungsrichtung des Fluids im Betrieb um einen vorbestimmten Winkel umlenkbar ist.

31. Fluidleitung (5) nach Anspruch 30, **dadurch gekennzeichnet, dass** der Schacht (20) in einer Stirnfläche der Fluidleitung (5) angeordnet ist.

32. Bausatz für ein Heizungsmodul für Fluidleitungen, insbesondere zur Kurbelgehäuseentlüftung einer Verbrennungskraftmaschine, mit einer im wesentlichen rohrförmigen Fluidleitung und mit einer an der Fluidleitung befestigbaren Heizvorrichtung, **dadurch gekennzeichnet, dass** die Fluidleitung (5) nach einem der Ansprüche 12 bis 22 ausgestaltet ist.

33. Heizungsmodul mit einer eine Außenwand (14) ausbildende Fluidleitung (5), insbesondere zur Kurbelgehäuseentlüftung einer Verbrennungskraftmaschine, und mit einer an der Fluidleitung (5) befestigten Heizvorrichtung (2), die ein auf die Außenwand (14) einwirkendes Heizelement (3) und eine das Heizelement (3) an der Fluidleitung (5) haltende Halteeinrichtung (4) umfasst, **dadurch gekennzeichnet, dass** in der Fluidleitung (5) ein Schacht (20) ausgeformt ist, in dem das Heizelement (3) und ein Vorsprung (9) der Halteeinrichtung (4) aufgenommen sind und dessen wenigstens eine Schachtwand (14, 20', 30) an den Innenraum (15, 31, 32) der Fluidleitung (5) grenzt.

34. Heizungsmodul (1) nach Anspruch 33, **dadurch gekennzeichnet, dass** die Halteeinrichtung (4) durch Formschluss wiederholt an der Fluidleitung (5) gehalten ist.

35. Heizungsmodul (1) nach Anspruch 33 oder 34, **dadurch gekennzeichnet, dass** der Klemmabschnitt in Einschieberichtung des Vorsprungs in den Schacht an der Fluidleitung verrastet ist.

36. Heizungsmodul (1) nach einem der Ansprüche 33 bis 35, **dadurch gekennzeichnet, dass** die Außenwand (14) wenigstens im Bereich des Schachtes (20) plastisch verformt ist.

37. Verfahren zur Herstellung eines Heizungsmoduls für eine Fluidleitung, insbesondere zur Kurbelgehäuseentlüftung einer Verbrennungskraftmaschine, umfassend folgende Verfahrensschritt:
- Einschieben eines Heizelements und eines Vorsprungs einer Haltevorrichtung in einen an einen Innenraum der Fluidleitung angrenzenden Schacht in der Außenwand der Fluidleitung, wobei der Schacht eine an den Innenraum angrenzende Wand aufweist;
- Aufnehmen des Heizelements in der Heizvorrichtung.

38. Verfahren nach Anspruch 37, umfassend folgenden Verfahrensschritt:
- Festklemmen der Haltevorrichtung an der Außenwand.

39. Verfahren nach Anspruch 37 oder 38, umfassend folgende Verfahrensschritte:
- Vormontieren von Heizelement und Halteeinrichtung zu einer Moduleinheit;
- Befestigen der Moduleinheit an der Fluidleitung.

40. Verfahren nach einem der Ansprüche 37 bis 39, umfassend folgenden Verfahrensschritt:
- Verformen der Fluidleitung bei eingesetztem Heizelement und gleichzeitiges Verpressen des Heizelements in dem Schacht.

## Claims

1. Heating device (2) for a fluid line (5) in particular for ventilating a crankcase of an internal combustion engine, comprising a heating element (3) and a holding device (4) whereby the heating element may be fixed to the fluid line, **characterised in that** the holding device has a projection (9) in which the heating element may be received and which is formed so as to be insertable into a shaft (20) with a shaft wall (14,20', 30) of the fluid line (5), said shaft wall abutting the interior (15) of the fluid line (5).

2. Heating device (2) according to claim 1, **characterised in that** the holding device has a resilient gripping section (10), which is formed so as to be applicable at least in sections to the outer wall (14) of the fluid line.

3. Heating device (2) according to claim 2, **characterised by** a recess (11) which is formed between the projection (9) and the gripping section (10) and in which the outer wall (14) of the fluid fine (5) may be received at least in sections.

4. Heating device (2) according to one of the preceding claims, **characterised in that** the heating device (2) is formed as a modular unit in which the heating element (3) is pre-assembled in the holding device (4).

5. Heating device (2) according to one of the preceding claims, **characterised in that** the heating element (3) is formed substantially as a plate.

6. Heating device (2) according to one of the preceding claims, **characterised in that** the projection (9) has a polygonal cross-section substantially transverse to the assembly direction, wherein one flat side of the polygon faces an interior (15).

7. Heating device (2) according to one of the preceding claims, **characterised in that** the heating element (3) comprises a PTC heating element (7).

8. Heating device (2) according to claim 7, **characterised in that** the PTC heating element (7) is disposed between two electrically conducting contact plates (6a, 6b), which are continued in terminal contact vanes (6a, 8b) to a plug-type connector.

9. Heating device (2) according to one of the preceding claims, **characterised in that** the holding device (4) has at least one guide element (12), which is formed so as to guide the holding device (4) upon insertion into the fluid line (5) in an insertion direction (M).

10. Heating device (2) according to one of the preceding claims, **characterised in that** the holding device (4) is manufactured from en electrically insulating material.

11. Kit for a heating unit (1) for fluid lines, in particular for ventilating the crankcase of an internal combustion engine, having a substantially tubular fluid line (5) and a heating device (2) fixable to the fluid line, **characterised in that** the heating device (2) is formed according to one of claims 1 to 8.

12. Fluid line (5), in particular for ventilating the crankcase of an internal combustion engine, having a substantially tubular conducting section, which is surrounded by an outer wall (14), **characterised by** a shaft (20), whose at least one shaft wall (14, 20', 30) abuts the interior (15, 31, 32) of the fluid line (5) and is formed so as to receive by insertion a heating element and a holding device, by means of which the heating element is fixable to the fluid wall.

13. Fluid fine (5) according to claim 12, **characterised in that** the shaft is formed between an inner face associated with the interior (15) of the fluid line (5) and an outward-facing outer face of the outer wall (14).

14. Fluid line (5) according to claim 12 or 13, **characterised in that** the shaft (20) is disposed in a region in which the wall thickness of the outer wall (14) is increased compared to surrounding regions.

15. Fluid line (5) according to one of claims 12 to 14, **characterised in that** the shaft (20) opens substantially in a direction parallel to the radius.

16. Fluid line (5) according to one of claims 12 to 15, **characterised in that** the shaft (20) opens substantially in the longitudinal direction of the fluid line (5).

17. Fluid line (5) according to one of claims 12 to 16, **characterised in that** the shaft walls extend in such a manner as to be passed over by the fluid in the interior (15) of the fluid line during operation.

18. Fluid line (5) according to claim 17, **characterised in that** shaft walls form a projection projecting into the interior (15).

19. Fluid line (5) according to claim 17, **characterised in that** the shaft walls form a partition wall (32), which divides the interior (15) of the fluid conducting member into substantially separate flow regions.

20. Fluid line (5) according to one of claims 12 to 19, **characterised in that** the shaft (20) has a polygonal cross-section substantially in the direction transverse to the assembly direction, wherein at least one flat side of the polygon faces the interior (15).

21. Fluid line (5) according to one of claims 12 to 20, **characterised in that** the inner face of the outer wall (14) associated with the interior of the fluid line has a substantially plane section (18).

22. Fluid line (5) according to one of claims 12 to 21, **characterised in that** the outer wall (14) has at least one guide element (21), by means of which the heating device may be guided in an insertion direction (M).

23. Fluid line (5) according to claim 22, **characterised in that** the guide device (21) comprises at least one groove.

24. Fluid line (5) according to one of claims 12 to 23, **characterised in that** the outer wall (14) has at least one weakened region (21), by means of which when force is exerted (F) a substantially locally limited deformation of the shaft (20) may be effected.

25. Fluid line (5) according to claim 24, **characterised in that** the weakened region (21) is substantially groove-like in form.

26. Fluid line (5) according to claim 24 or 25, **characterised in that** the weakened region (21) is formed in the outer face (19) of the outer wall (14).

27. Fluid line (5) according to one of claims 24 to 26, **characterised in that** the weakened region (21) overlaps the shaft (20) in the radial direction.

28. Fluid line (5) according to one of claims 12 to 27, **characterised in that** the fluid line (5) is manufactured from heat-conducting metal material.

29. Fluid line (5) according to one of claims 12 to 28, **characterised in that** the shaft (20) is separated by the outer wall (14) from the interior (15) of the fluid line.

30. Fluid line (5) according to one of claims 12 to 29, **characterised in that** the fluid line (5) is formed as an elbow element, in which the flow direction of the fluid is deflectable through a specified angle during operation.

31. Fluid line (5) according to claim 30, **characterised in that** the shaft (20) is disposed in an end face of the fluid line (5).

32. Kit for a heating unit for fluid lines, in particular for the ventilation of the crankcase of an internal combustion engine, having a substantially tubular fluid line and e heating device fixable to the fluid line, **characterised in that** the fluid line (5) is formed according to one of claims 12 to 31.

33. Heating unit with a fluid line (5) forming an outer wall (14), in particular for the ventilation of the crankcase of an internal combustion engine, and having a heating device (2) which is fixed to the fluid line (5) and which comprises a heating element (3) acting on the outer wall (14) and a holding device (4) holding the , heating element (3) on the fluid line (5), **characterised in that** in the fluid line (5) a shaft (20) is formed, in which the heating element (3) and a projection (9) of the holding device (4) are received and whose at least one shaft wall (14,20', 30) abuts the interior (15, 31, 32) of the fluid line (5).

34. Heating unit (1) according to claim 33, **characterised in that** the holding device (4) is held repeatedly on the fluid line (5) by positive locking.

35. Heating unit (1) according to claim 33 or 34, **characterised in that** the gripping section is locked on the fluid line in the direction of insertion of the projection into the shaft.

36. Heating unit (1) according to one of claims 33 to 35, **characterised in that** the outer wall (14) is subjected to plastic deformation at least in the region of the shaft (20).

37. Method of manufacturing a heating unit for a fluid line, In particular for ventilating a crankcase of an internal combustion engine, comprising the following steps:
- insertion of a heating element and projection of a holding device into a shaft abutting an interior of the fluid line in the outer wall of the fluid line, wherein the shaft has a wall abutting the interior;
- receiving of the heating element in the heating device.

38. Method according to claim 37, comprising the following step:
- clamping of the holding device to the outer wall.

39. Method according to claim 37 or 38, comprising the following steps:
- pre-assembly of heating element and holding device into a modular unit;
- fixing of the modular unit to the fluid line.

40. Method according to one of claims 37 to 39, comprising the following step:
- deformation of the fluid line with the heating element inserted and simultaneous pressing of the heating element in the shaft.

## Revendications

1. Dispositif de chauffage (2) pour un conduit de fluide (5), notamment pour la ventilation du carter d'une machine à combustion interne, comprenant un élément de chauffage (3) et un dispositif de maintien (4), par lequel l'élément de chauffage peut être fixé au conduit de fluide, **caractérisé en ce que** le dispositif de maintien présente une partie en saillie (9), dans laquelle peut être logé l'élément de chauffage et qui est formée en pouvant être introduite en glissant dans un puits (20) comprenant une paroi de puits (14, 20', 30) du conduit de fluide (15) adjacente à l'espace interne (15) du conduit de fluide (5).

2. Dispositif de chauffage (2) selon la revendication 1, **caractérisé en ce que** le dispositif de maintien présente une section de serrage élastique (10) qui est configurée de manière à pouvoir s'appliquer au moins par sections à la paroi externe (14) du conduit de fluide.

3. Dispositif de chauffage (2) selon la revendication 2, **caractérisé par** un évidement (11) conçu entre la partie en saillie (9) et la section de serrage (10), dans lequel peut être logée, au moins par sections, la paroi externe (14) du conduit de fluide (5).

4. Dispositif de chauffage (2) selon l'une des revendications susmentionnées, **caractérisé en ce que** le dispositif de chauffage (2) est configuré comme une unité de module, dans laquelle l'élément de chauffage (3) est monté à l'avance dans le dispositif de maintien (4).

5. Dispositif de chauffage (2) selon l'une des revendications susmentionnées, **caractérisé en ce que** l'élément de chauffage (3) est configuré essentiellement sous forme de plaque.

6. Dispositif de chauffage (2) selon l'une des revendications susmentionnées, **caractérisé en ce que** la partie en saillie (9) présente une section transversale polygonale essentiellement transversale au sens de montage, un côté plat du polygone étant orienté vers un espace interne (15).

7. Dispositif de chauffage (2) selon l'une des revendications susmentionnées, **caractérisé en ce que** l'élément de chauffage (3) comprend un élément de chauffage PTC.

8. Dispositif de chauffage (2) selon la revendication 7, **caractérisé en ce que** l'élément de chauffage PTC (7) est disposé entre deux plaques de contact (6a, 6b) conductrices électriquement qui se continuent en barrettes de contact de raccordement (8a, 8b) vers un connecteur enfichable.

9. Dispositif de chauffage (2) selon l'une des revendications susmentionnées, **caractérisé en ce que** le dispositif de maintien (4) présente au moins un élément de guidage (12), qui est configuré en guidant le dispositif de maintien (4) dans un sens d'insertion (M) lors de l'insertion dans le conduit de fluide (5).

10. Dispositif de chauffage (2) selon l'une des revendications susmentionnées, **caractérisé en ce que** le dispositif de maintien (4) est fabriqué à partir d'un matériau isolé électriquement.

11. Kit pour un module de chauffage (1) pour des conduits de fluide, notamment pour la ventilation du carter d'une machine à combustion interne, comprenant un conduit de fluide (5) essentiellement en forme de tuyau et un dispositif de chauffage (2) pouvant être fixé au conduit de fluide, **caractérisé en ce que** le dispositif de chauffage (2) est configuré selon l'une des revendications 1 à 8.

12. Conduit de fluide (5), notamment pour la ventilation du carter d'une machine à combustion interne, comprenant une section de conduit essentiellement en forme de tuyau, qui est entourée d'une paroi externe (14), **caractérisé par** un puits (20) dont au moins une paroi de puits (14, 20', 30) est contiguë à l'espace interne (15, 31, 32) du conduit de fluide (5), et qui est configuré pour loger, de façon à pouvoir insérer, un élément de chauffage et un dispositif de maintien, par lequel l'élément de chauffage peut être fixé au conduit de fluide.

13. Conduit de fluide (5) selon la revendication 12, **caractérisé en ce que** le puits est configuré entre une surface interne orientée vers l'espace interne (15) du conduit de fluide (5) et une surface externe se dirigeant vers l'extérieur de la paroi externe (14).

14. Conduit de fluide (5) selon la revendication 12 ou 13, **caractérisé en ce que** le puits (20) est disposé dans une zone dans laquelle l'épaisseur de paroi de la paroi externe (14) est accrue par rapport aux zones environnantes.

15. Conduit de fluide (15) selon l'une des revendications 12 à 14, **caractérisé en ce que** le puits (20) s'ouvre essentiellement dans un sens parallèle au rayon.

16. Conduit de fluide (5) selon l'une des revendications 12 à 15, **caractérisé en ce que** le puits (20) s'ouvre essentiellement dans un sens longitudinal du conduit de fluide (5).

17. Conduit de fluide (5) selon l'une des revendications 12 à 16, **caractérisé en ce que** les parois de puits s'étendent dans l'espace interne (15) du conduit de fluide en pouvant être entourées par le fluide, en fonctionnement.

18. Conduit de fluide (5) selon la revendication 17, **caractérisé en ce que** les parois du puits forment une partie en saillie dépassant dans l'espace interne (15).

19. Conduit de fluide (5) selon la revendication 17, **caractérisé en ce que** les parois de puits constituent une paroi de séparation (32) qui subdivise l'espace interne (15) de la partie de conduit de fluide en zones d'écoulement essentiellement séparées les unes des autres.

20. Conduit de fluide (5) selon l'une des revendications 12 à 19, **caractérisé en ce que** le puits (20) présente, dans un sens essentiellement transversal au sens de montage, une section transversale polygonale, au moins une face plate du polygone étant orientée vers l'espace interne (15).

21. Conduit de fluide (5) selon l'une des revendications 12 à 20, **caractérisé en ce que** la surface interne orientée vers l'espace interne du conduit de fluide de la paroi externe (14) présente une section essentiellement plane (18).

22. Conduit de fluide (5) selon l'une des revendications 12 à 21, **caractérisé en ce que** la paroi externe (14) présente au moins un élément de guidage (21), par lequel le dispositif de chauffage peut être guidé dans un sens d'insertion (M).

23. Conduit de fluide (5) selon la revendication 22, **caractérisé en ce que** le dispositif de guidage (21) comprend au moins une rainure.

24. Conduit de fluide (5) selon l'une des revendications 12 à 23, **caractérisé en ce que** la paroi externe (14) présente au moins une zone d'affaiblissement (21), par laquelle sous l'effet d'une force (F), une déformation du puits (20) essentiellement limitée localement peut être provoquée.

25. Conduit de fluide (5) selon la revendication 24, **caractérisé en ce que** la zone d'affaiblissement (21) est configurée essentiellement en forme de rainure.

26. Conduit de fluide (5) selon la revendication 24 ou 25, **caractérisé en ce que** la zone d'affaiblissement (21) est conçue dans la surface externe (19) de la paroi externe (14).

27. Conduit de fluide (5) selon l'une des revendications 24 à 26, **caractérisé en ce que** la zone d'affaiblissement (21) se chevauche dans le sens radial avec le puits (20).

28. Conduit de fluide (5) selon l'une des revendications 12 à 27, **caractérisé en ce que** le conduit de fluide (5) est fabriqué à partir d'un matériau métallique conducteur thermiquement.

29. Conduit de fluide (5) selon l'une des revendications 12 à 28, **caractérisé en ce que** le puits (20) est séparé de l'espace interne (15) du conduit de fluide par la paroi externe (14).

30. Conduit de fluide (5) selon l'une des revendications 12 à 29, **caractérisé en ce que** le conduit de fluide (5) est configuré comme un élément angulaire, dans lequel le sens d'écoulement du fluide peut être dévié d'un angle prédéterminé, en fonctionnement.

31. Conduit de fluide (5) selon la revendication 30, **caractérisé en ce que** le puits (20) est disposé dans une surface frontale du conduit de fluide (5).

32. Kit pour un module de chauffage pour conduits de fluide, notamment pour la ventilation du carter d'une machine à combustion interne, avec un conduit de fluide essentiellement en forme de tuyau et un dispositif de chauffage pouvant être fixé au conduit de fluide, **caractérisé en ce que** le conduit de fluide (5) est configuré selon l'une des revendications 12 à 31.

33. Module de chauffage avec un conduit de fluide (5) constituant une paroi externe (14), notamment pour la ventilation du carter d'une machine à combustion interne, et un dispositif de chauffage (2) fixé au conduit de fluide (5), qui comprend un élément de chauffage (3) agissant sur la paroi externe (14) et un dispositif de maintien (4) maintenant l'élément de chauffage (3) sur le conduit de fluide (5), **caractérisé en ce qu'**un puits (20) est formé dans le conduit de fluide (5), dans lequel sont logés l'élément de chauffage (3) et une partie en saillie (9) du dispositif de maintien (4) et dont au moins une paroi de puits (14, 20', 30) est contiguë à l'espace interne (15, 31, 32) du conduit de fluide (5).

34. Module de chauffage (1) selon la revendication 33, **caractérisé en ce que** le dispositif de maintien (4) est maintenu par engagement positif et de façon répétée au conduit de fluide (5).

35. Module de chauffage (1) selon la revendication 33 ou 34, **caractérisé en ce que** la section de serrage est verrouillée dans le sens d'insertion de la saillie dans le puits sur le conduit de fluide.

36. Module de chauffage (1) selon l'une des revendications 33 à 35, **caractérisé en ce que** la paroi externe (14) est déformée plastiquement au moins dans la zone du puits (20).

37. Procédé de fabrication d'un module de chauffage pour un conduit de fluide, en particulier pour la ventilation du carter d'une machine à combustion interne, comprenant les étapes de procédé suivantes :
- insertion d'un élément de chauffage et d'une partie en saillie d'un dispositif de maintien dans un puits contigu à un espace interne du conduit de fluide, situé dans la paroi externe du conduit de fluide, le puits présentant une paroi contiguë à l'espace interne ;
- logement de l'élément de chauffage dans le dispositif de chauffage.

38. Procédé selon la revendication 37, comprenant l'étape de procédé suivante :
- blocage du dispositif de maintien sur la paroi externe.

39. Procédé selon la revendication 37 ou 38, comprenant les étapes de procédé suivantes :
- pré-montage d'un élément de chauffage et d'un dispositif de maintien sur une unité de module ;
- fixation de l'unité de module sur le conduit de fluide.

40. Procédé selon l'une des revendications 37 à 39, comprenant l'étape de procédé suivante :
- déformation du conduit de fluide lors de la mise en place de l'élément de chauffage et compression simultanée de l'élément de chauffage dans le puits.
